# FASCICULE DE BREVET EUROPEEN

(11) **EP 3 571 261 B1**
(45) Date de publication et mention de la délivrance du brevet: **17.02.2021**
(21) Numéro de dépôt: 17828980.7
(22) Date de dépôt: 20.12.2017
(51) Int. Cl.: C09K 8/588, E21B 43/16

(54) **PROCEDE DE RECUPERATION ASSISTEE DE PETROLE PAR INJECTION D'UNE COMPOSITION AQUEUSE POLYMERIQUE CONTENANT DES MICROGELS**
VERFAHREN ZUR ERHÖHTEN ÖLRÜCKGEWINNUNG DURCH EINSPRITZEN EINER WÄSSRIGEN POLYMERZUSAMMENSETZUNG MIT MIKROGELEN
METHOD FOR ENHANCED OIL RECOVERY BY INJECTING AN AQUEOUS POLYMERIC COMPOSITION CONTAINING MICROGELS

(30) Priorité: 19.01.2017 FR 1750446
(43) Date de publication de la demande: 27.11.2019
(73) Titulaire: S.P.C.M. SA, 42160 Andrézieux Bouthéon (FR); Poweltec, 92500 Rueil Malmaison (FR)
(72) Inventeur: FAVERO, Cédrick, 42160 Andrezieux Boutheon (FR); BRAUN, Olivier, 42160 Andrezieux Boutheon (FR); TOGNISSO, Elvire, 42160 Andrezieux Boutheon (FR); ZAITOUN, Alain, 75010 Paris (FR); SALEHI, Nazanin, 75007 Paris (FR); BOUILLOT, Jérôme, 78420 Carrieres Sur Seine (FR)
(74) Mandataire: Cabinet Laurent & Charras
(86) Numéro de dépôt international: PCT/FR2017/053716
(87) Numéro de publication internationale: WO 2018/134489

(56) Documents cités:
- WO-A1-2009/131900
- WO-A1-2009/131901
- WO-A1-2012/021213
- WO-A1-2015/059024

## Description

La présente invention concerne le domaine technique de la récupération assistée du pétrole dans un gisement. Plus précisément, la présente invention a pour objet un procédé amélioré de récupération assistée du pétrole par balayage d'une formation souterraine grâce à l'introduction dans le gisement, d'une composition aqueuse comprenant des microgels de polymères faiblement réticulés.

La plupart des champs de pétrole actuellement exploités sont devenus matures et ont, de fait, amorcé le déclin de leur production ou sont sur le point de le faire. Le taux de récupération de ces champs est actuellement de l'ordre de 15 à 35% en moyenne par rapport à la quantité initiale de pétrole. Ils offrent donc un potentiel de production encore considérable.

De manière générale, la récupération du pétrole brut contenu dans les gisements s'effectue en plusieurs temps.

La production résulte d'abord de l'énergie naturelle des fluides et de la roche qui se décompriment. A l'issue de cette phase de déplétion, la quantité d'huile récupérée en surface représente en moyenne quelques 5 à 15 % de la réserve initiale. Il est donc nécessaire dans un deuxième temps d'employer des techniques visant à accroître le rendement de récupération en maintenant la pression du champ.

Pour cela, la méthode la plus fréquemment mise en œuvre consiste à injecter de l'eau dans le gisement par le biais de puits injecteurs dédiés à cette fin. On parle alors de récupération secondaire. Cette deuxième phase s'arrête lorsque le rapport eau/huile est trop important, c'est-à-dire lorsque la quantité en eau dans le mélange produit par les puits producteurs est trop importante. Cette récupération secondaire permet ainsi d'obtenir un taux de récupération additionnel de l'ordre de 10 à 20%.

Les autres techniques utilisables sont regroupées sous le nom de récupération assistée du pétrole (RAP ou EOR acronyme anglais de « Enhanced Oil Recovery »). Leur but est de récupérer entre 10 et 35% d'huile additionnelle par rapport à la quantité initiale d'huile. Sous le terme de récupération assistée du pétrole sont connues diverses techniques thermiques, ou non telles que les techniques dites électrique, miscible, vapeur, ou encore chimique de « récupération améliorée du pétrole » restant en place (voir « Oil & gas science and technology » - revue IFP, vol 63 (2008) n°1, pp 9-19). Par « pétrole », on désigne tout type d'huile, à savoir huile légère comme huile lourde, voire bitumineuse. Une huile résulte généralement de la transformation naturelle de matière organique et est composée d'un mélange d'hydrocarbures. Dans la description de l'art antérieur ou de l'invention, les termes pétrole et huile sont utilisés pour désigner la même matière.

La présente invention concerne plus précisément la récupération assistée du pétrole par voie chimique impliquant l'injection, dans une formation souterraine, d'une composition aqueuse contenant au moins un polymère hydrosoluble, ladite composition aqueuse étant apte à balayer la formation souterraine, et donc à pousser le pétrole en dehors de la roche.

L'objectif de l'invention n'est pas de gélifier le polymère pour modifier la perméabilité de la roche et boucher les trous, technique désignée sous l'appellation « contrôle de profil » ou colmatage des voies d'eau.

On distingue les techniques de récupération assistée du pétrole par balayage (EOR pour Enhanced Oil Recovery) des opérations de stimulation d'un réservoir. Ces dernières sont caractérisées par des injections limitées en volume de solution de polymère afin de créer un phénomène localisé dans le réservoir. Pour la conformance, il s'agit d'un bouchage des zones de fortes perméabilités à partir d'un puits injecteur d'eau, alors que pour le « water shutt off » il s'agit d'un bouchage de conduit par injection directe dans un puits producteur de pétrole. Les injections sont généralement faites soit à partir d'un puits injecteur, soit à partir d'un puits producteur sur des durées assez faibles de quelques jours et généralement inférieures à un mois, et avec des volumes de composition injectée représentant moins de 5 % du volume poreux du réservoir. Le volume poreux correspond au volume non occupé par la roche dans le réservoir qui est une zone perméable.

A l'opposé, les techniques de récupération assistée du pétrole par balayage (EOR) utilisant des polymères impliquent une injection continue et prolongée de solution de polymère pour balayer le réservoir d'un puits injecteur jusqu'à un puits producteur. Le but n'est pas de traiter une zone du réservoir mais sa totalité afin de récupérer un maximum d'huile. Pour cela, il est nécessaire d'injecter un volume de solution aqueuse beaucoup plus important compris généralement entre 30% et 500%, voire plus, du volume poreux. Au niveau du ou des puits producteurs, on récupère un mélange aqueux, huileux et parfois gazeux.

Dans toutes ces techniques, l'efficacité du balayage par injection d'eau est généralement améliorée par l'addition de polymères hydrosolubles. Les bénéfices attendus et prouvés de l'utilisation de polymères, au travers de la « viscosification » des eaux injectées, sont l'amélioration du balayage et du contrôle de la mobilité dans le champ afin de récupérer l'huile rapidement et efficacement. Ces polymères augmentent la viscosité de l'eau.

Il est connu de l'homme du métier que les polymères hydrosolubles synthétiques, et en particulier à base d'acrylamide, sont des polymères très avantageux pour augmenter la viscosité des solutions aqueuses et sont de fait, majoritairement utilisés en récupération assistée du pétrole.

Cependant les polymères d'acrylamide sont sensibles aux dégradations chimiques, biologiques et mécaniques. Des solutions ont été proposées dans les documents WO 2010/133258 et WO 2013/108173 pour améliorer la résistance des polymères aux dégradations chimiques et à la température élevée. D'autres solutions ont été proposées dans les documents US 2012/0292029 et US 2015/041143 pour éviter la dégradation mécanique de polymère en utilisant un matériel adapté.

Il existe néanmoins toujours un besoin pour améliorer la résistance mécanique des polymères à base d'acrylamide dans les procédés de récupération assistée du pétrole par balayage de la formation souterraine.

La Demanderesse a découvert de manière surprenante que la résistance mécanique de ces polymères était grandement améliorée lorsqu'ils étaient injectés sous forme de microgels faiblement réticulés.

Les microgels sont une forme connue des polymères d'acrylamide. Le document EP 1 290 310 décrit l'utilisation de microparticules de polymères expansibles fortement réticulés pour modifier la perméabilité à l'eau dans un réservoir souterrain. Les quantités de réticulant labile sont comprises entre 9000 et 200000 ppm. Ces microparticules obtenues sont hydrogonflantes. Leur gonflement dans certaines zones de la formation permet le bouchage desdites zones par formation d'un gel.

Ces microparticules ne sont pas adaptées à l'application de récupération assistée du pétrole par balayage étant donné qu'elles ne peuvent pas se propager loin dans la formation et donc procurer un balayage uniforme et efficace du réservoir. En effet, le gel bouche les trous du réservoir et n'a pas pour fonction de pousser l'huile. Le traitement de conformance est ponctuel et a pour objectif de modifier la perméabilité du réservoir de manière localisée.

Le document WO 2009/131900 décrit un procédé de récupération assistée du pétrole d'une formation souterraine comprenant l'injection dans la formation souterraine d'une composition aqueuse comprenant des microparticules comprenant au moins un polymère fortement réticulé, caractérisé en ce que ledit polymère est réticulé avec au moins un réticulant apte à être dégradé dans les conditions de température de la formation souterraine. Les microparticules polymères ont une structure de copolymère séquencé comprenant au moins deux monomères différents ayant des structures chimiques différentes et dans lequel l'agent de réticulation labile est choisi parmi les diacrylates et les dérivés vinyliques polyfonctionnels d'un polyalcool. La quantité d'agent de réticulation labile dans le polymère est comprise entre 100 et 200 000 ppm.

La Demanderesse s'est focalisée sur la récupération assistée du pétrole par balayage de la formation souterraine et a découvert que l'utilisation d'une faible quantité de réticulant apte à être dégradé dans les conditions de température de la formation souterraine, dans la production de polymère permettait d'améliorer la résistance mécanique du polymère.

Plus précisément, la présente invention concerne un procédé de récupération assistée du pétrole par balayage d'une formation souterraine comprenant l'injection dans la formation souterraine d'une composition aqueuse comprenant des microgels comprenant au moins un polymère réticulé, caractérisé en ce que ledit polymère est réticulé avec au moins un réticulant apte à être dégradé dans les conditions de température de la formation souterraine, et a une teneur en réticulant comprise entre 1 et 90 ppm en mole par rapport au nombre total de mole de monomère constitutif du polymère.

Autrement dit, et plus précisément, le procédé selon l'invention comprend les étapes suivantes :
- préparer un fluide d'injection (composition aqueuse) à partir d'une émulsion inverse de polymère, avec de l'eau ou une saumure, afin d'obtenir des microgels dans ledit fluide,
- injecter le fluide d'injection dans une formation souterraine,
- balayer la formation souterraine à l'aide du fluide injecté,
- récupérer un mélange aqueux et huileux et/ou gazeux.

Comme déjà indiqué, le polymère est réticulé avec au moins une réticulant apte à être dégradé dans les conditions de température de la formation souterraine. Il comprend une quantité en réticulant comprise entre 1 et 90 ppm en mole par rapport au nombre total de mole de monomère constitutif du polymère.

Le procédé selon l'invention permet de préserver le polymère des dégradations mécaniques liées à la préparation de la composition injectée avec le polymère, et à son injection, tout en conservant une bonne injectivité et un excellent balayage de la formation souterraine.

Une fois injectés, les microgels présents dans le fluide d'injection, libèrent les chaînes polymériques, et ce de manière subséquente à la dégradation par hydrolyse des fonctions réticulantes présentes dans le polymère du microgel dans les conditions de température de la formation souterraine. Ainsi, le balayage est effectué par une composition aqueuse comprenant des polymères hydrosolubles, et non pas des microgels contenant des polymères réticulés.

Le polymère est un polymère synthétique, de préférence un polymère obtenu à partir d'au moins un monomère non ionique et/ou au moins un monomère anionique et/ou au moins un monomère cationique.

Le ou les monomères non ioniques pouvant être utilisés dans le cadre de l'invention peuvent être choisis, notamment, dans le groupe comprenant les monomères vinyliques solubles dans l'eau. Des monomères préférés appartenant à cette classe sont, par exemple, l'acrylamide, le méthacrylamide, le N-isopropylacrylamide, le N,N-diméthylacrylamide et le N-méthylolacrylamide. Egalement, peuvent être utilisés la N-vinylformamide, le N-vinyl acetamide, la N-vinylpyridine, la N-vinylpyrrolidone, l'acryloyl morpholine (ACMO) et la diacétone acrylamide. Un monomère non ionique préféré est l'acrylamide.

Le ou les monomères anioniques sont préférentiellement choisis parmi l'acide acrylique, l'acide méthacrylique, l'acide itaconique, l'acide maléique, l'acide 2-acrylamido-2-méthylpropane sulfonique (ATBS), l'acide vinylsulphonique, l'acide vinylphosphonique, ledit monomère anionique étant non salifie, partiellement ou totalement salifie. Il peut également s'agir des sels du méthacrylate de 3-sulfopropyle.

Le ou les monomères cationiques pouvant être utilisés dans le cadre de l'invention peuvent être choisis, notamment parmi les monomères du type acrylamide, acrylique, vinylique, allylique ou maléique possédant une fonction ammonium quaternaire. On peut citer, en particulier et de façon non limitative, l'acrylate de diméthylaminoéthyle (ADAME) quaternisé, le méthacrylate de diméthylaminoéthyle (MADAME) quaternisé, le chlorure de diméthyldiallylammonium (DADMAC), le chlorure d'acrylamido propyltriméthyl ammonium (APTAC), et le chlorure de méthacrylamido propyltriméthyl ammonium (MAPTAC).

Selon certains modes de réalisation, en plus des monomères ci-dessus, les copolymères peuvent également comprendre un ou plusieurs monomères hydrophobes. Les documents WO 2005/100423 et WO 2013/15003 exemplifient des monomères hydrophobes adéquats et avantageux.

Le polymère est préférentiellement un polymère anionique à base d'acrylamide, préférentiellement un copolymère d'acrylamide et d'acide acrylamido tertio butyl sulfonique (ATBS) optionnellement partiellement post-hydrolysé, plus préférentiellement un terpolymère d'acrylamide, d'acide acrylique et d'acrylamido tertio butyl sulfonique acide (ATBS).

La viscosité d'un polymère est, pour une structure et une chimie identiques, d'autant plus élevée que la taille de la chaine polymérique est longue. Ceci est lié à des enchevêtrements physiques entre les chaines créant une résistance à la mobilité moléculaire, ce qui génère de la viscosité. Dans le cadre de la présente application, il est donc avantageux d'utiliser des polymères de poids moléculaire élevé.

Par « poids moléculaire élevé », on désigne des poids moléculaires d'au moins 1 million de g/mol, préférentiellement entre 2 et 30 millions g/mol, plus préférentiellement entre 5 et 20 millions g/mol. Sauf indication contraire, il s'agit du poids moléculaire moyen en masse.

Selon l'invention, le polymère est faiblement réticulé à l'aide d'un ou de plusieurs réticulants aptes à être dégradés dans les conditions de température de la formation souterraine, la quantité totale de réticulant(s) étant comprise entre 1 et 90 ppm en mole par rapport au nombre total de mole de monomère(s) constitutif(s) du polymère. De manière préférée, la quantité de réticulant(s) est comprise entre 10 et 80 ppm, plus préférentiellement entre 30 et 70 ppm, encore plus préférentiellement entre 40 et 60 ppm.

Cette quantité faible et précise de réticulant spécifique est indispensable pour obtenir un polymère présentant une bonne résistance à la dégradation mécanique lors de la préparation de la composition injectée avec le polymère, et lors de son injection, tout en conservant une bonne injectivité et une bonne performance de balayage une fois dans la formation souterraine, après que les chaînes polymériques se soient libérées. Au-delà de cette quantité, le polymère est trop réticulé et a tendance à ne pas balayer correctement le réservoir. En dessous de cette quantité, le polymère est plus sensible aux dégradations mécaniques.

Les conditions de température des formations souterraines varient en fonction des formations. Ainsi certains réticulants seront dégradés dans certaines formations souterraines dans lesquelles la température est élevée, par exemple plus de 120°C. Le même réticulant ne sera pas dégradé dans une formation dans laquelle la température est plus basse, par exemple 60°C. L'invention concerne donc un procédé dans lequel la réticulation et plus précisément la nature du ou des réticulants, est adaptée en fonction des températures de la formation souterraine à traiter. De manière avantageuse, la température de la formation souterraine est comprise entre 10 et 250°C, plus avantageusement entre 30 et 150 °C.

Dans un mode de réalisation préféré, le procédé comprend une étape d'étude préliminaire, précédant l'étape de préparation du fluide d'injection, dans laquelle la température de la formation souterraine est prise en compte pour sélectionner le ou les réticulants de telle manière que lesdits réticulants puissent être dégradés dans les conditions de température de la formation souterraine. Autrement dit, le ou les réticulants utilisés pour réticuler le polymère sont choisis pour avoir une température de dégradation inférieure à la température de la formation souterraine.

Les réticulants sont avantageusement dégradés par hydrolyse. Lorsque les réticulants spécifiques selon l'invention sont incorporés dans la structure du polymère, leur dégradation dans la formation souterraine permet aux polymères faiblement réticulés du microgel de se déployer et ainsi d'augmenter la viscosité du fluide d'injection. L'intégrité du polymère n'en est pas affectée, et au contraire le polymère présente une meilleure résistance aux dégradations mécaniques lors de la préparation du fluide d'injection avec le polymère, et lors de son injection, tout en offrant de très bonne performance de balayage une fois libéré dans la formation souterraine.

Le ou les réticulants aptes à être dégradés dans les conditions de température de la formation souterraine sont préférentiellement choisis parmi le méthylène-bis-acrylamide, les diacrylamides de diamine tels que le diacrylamide de piperazine ; les diméthacrylamides de diamine ; les esters (méth)acrylate de composés di hydroxylés, tri hydroxylés ou tetra hydroxylés tels que l'éthylèneglycol diacrylate, le polyéthylèneglycol diacrylate, le triméthylolpropane triméthacrylate, le triéthylol triacrylate éthoxylé, le pentaerythritol tetracrylate éthoxylé ; les composés divinyl ou diallyl séparés par un groupe azoïque tels que la diallylamide de 2,2'-azobis(isobutyric acid) ; et les esters vinyl ou allyl de diacides ou triacides. Les réticulants labiles préférés incluent les diacrylates hydrosolubles tels que le diacrylate de PEG 200, le diacrylate de PEG 400 et le diacrylate de PEG 600, et les dérivés polyvinyliques de polyalcools tels que le triméthylol triacrylate éthoxylé 9-20. Les diacrylate PEG 200, 400 et 600 ont des poids moléculaires respectivement de 200, 400 et 600 g/mol. Les réticulants éthoxylés 9-20 comprennent 9 à 20 groupements éthoxy CH₂-CH₂-O.

De manière avantageuse, le réticulant mis en œuvre dans l'invention présente un poids moléculaire inférieur à 1500 g/mol, plus avantageusement inférieur à 1000 g/mol et encore plus avantageusement inférieur à 800 g/mol.

Dans un mode particulièrement avantageux de l'invention, le ou les polymères sont réticulés avec au moins deux réticulants différents, tous étant aptes à être dégradés dans les conditions de température de la formation souterraine. Préférentiellement, le ou les polymères selon l'invention sont réticulés avec au moins un réticulant diacrylate hydrosoluble, préférentiellement un diacrylate de polyéthylèneglycol, et avec au moins un réticulant à fonction acrylamide, préférentiellement le méthylène-bis-acrylamide.

La quantité totale de réticulant selon l'invention reste bien comprise entre 1 et 90 ppm en mole par rapport au nombre total de mole de monomère(s) constitutif(s) du polymère. Le ratio de l'un par rapport à l'autre pourra varier en fonction de la température de la formation souterraine.

De manière préférée, le polymère, et donc les microgels, ne contient pas de réticulant n'étant pas apte à être dégradé dans les conditions de température de la formation souterraine. Parmi ces réticulants n'étant pas dégradés, on peut citer la triallylamine (TAA) et la tetra-allylamine chlorée (TAAC).

Le polymère mis en œuvre dans l'invention est avantageusement obtenu par polymérisation en émulsion inverse ou en microémulsion inverse. Cette technique de polymérisation est bien connue de l'homme de métier. Elle consiste à mettre en émulsion une phase aqueuse contenant le ou les monomères et le(s) réticulant(s) dans une phase huileuse. Cette émulsification se fait grâce à un tensioactif eau dans huile. La polymérisation se déroule dans les microréacteurs que constituent les microgouttelettes. Un tensioactif huile dans eau est éventuellement ajouté pour faciliter l'inversion de l'émulsion dans l'eau.

Dans la forme émulsion inverse, le polymère se trouve dans les gouttelettes micrométriques hydrophiles émulsionnées dans la phase continue huileuse. Généralement les émulsions inverses contiennent entre 20 et 60 % en masse de polymère.

Selon l'invention, la taille moyenne des microgels de polymère réticulé dans la composition à injecter est comprise entre 0,1µm et 10µm, préférentiellement entre 1µm et 5µm. La taille moyenne des microgels de polymère réticulé est la taille moyenne du diamètre, mesurée avec un appareil de mesure laser utilisant les techniques conventionnelles qui font partie des connaissances de l'homme de métier. Un appareil de type Mastersizer de la société Malvern pourra être utilisé à cet effet. Le microgel correspond à des particules de polymère réticulé ayant gonflé avec de l'eau.

Le polymère sous forme d'émulsion inverse peut être mis en solution, soit directement dans la saumure ou fluide d'injection, soit en utilisant la méthode décrite dans le document US 2011/0118153 qui propose la mise en solution, en ligne et en continu, d'émulsions inverses de polymères hydrosolubles.

De manière générale, le fluide d'injection contient, avant son injection, entre 20 ppm et 5000 ppm en masse d'un ou plusieurs polymères réticulés tels que décrits précédemment, préférentiellement entre 300 ppm et 4000 ppm en masse par rapport à la masse du fluide d'injection c'est-à-dire de la composition aqueuse.

Les techniques SP (Surfactant Polymer) et ASP (Alkaline Surfactant Polymer) bien connues de l'homme de métier pourront être mises en œuvre avec le même principe selon l'invention. De même, les polymères viscosifiants du fluide d'injection pourront être protégés selon les techniques décrites dans le document WO 2010/133258.

De manière avantageuse, le fluide d'injection, présente au moment de son injection, une viscosité comprise entre 1 et 200 cps (centipoises) (mesures de viscosité à 20°C avec un viscosimètre Brookfield avec un module UL et à vitesse 6 tours par minute).

Dans le cadre de l'invention, la composition aqueuse viscosifiée contenant les microgels selon l'invention est ensuite injectée dans une formation souterraine, selon toute technique connue de l'homme de l'art dans les procédés de récupération assistée du pétrole par balayage également nommés « EOR ». Sa préparation est réalisée sur site, juste en amont de son injection dans le gisement. En général, tous les composants introduits dans la composition aqueuse sont, le plus souvent additionnés sur une ligne de circulation de la composition aqueuse ou de la saumure.

### DESCRIPTION DES FIGURES

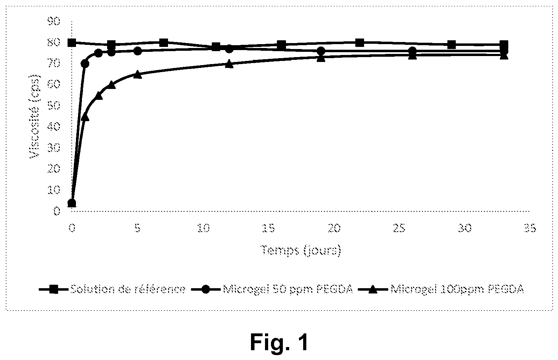

La figure 1 est un graphique représentant l'évolution de la viscosité au cours du temps en condition anaérobie de microgels selon l'invention.

### EXEMPLES DE REALISATION DE L'INVENTION

Une solution aqueuse comprenant 228,45 g d'une solution d'acrylamide à 50% (en poids), 451,55 g d'une solution de tertio butyl acrylamide sulfonate de sodium à 50% (en poids), 45 g d'eau et 0,77 g de versenex® est préparée dans un bêcher.

Cette solution aqueuse est séparée en trois échantillons. Dans deux échantillons, du polyéthylène glycol diacrylate (PEG diacrylate) est ajouté, de manière à obtenir trois solutions contenant respectivement un taux de PEG diacrylate ppm mol/mol de monomère de 0 (référence), 50 (invention) et 100 (contre-exemple).

Chacune des solutions ainsi obtenue est transvasée dans un réacteur contenant une solution organique comprenant 246 g d'huile minérale et 29 g de monooléate de sorbitan.

Les mélanges ainsi obtenus sont emulsionnés pendant une minute. Les émulsions inverses ainsi créées sont ensuite dégazées par bullage d'azote pendant trente minutes.

Dans chacune des émulsions est ensuite ajouté du terbutyl hydroperoxide et du metabisulfite afin d'amorcer la polymérisation des monomères de la solution aqueuse initiale. La température du milieu réactionnel augmente alors. A la fin de la montée en température, on laisse la polymérisation se poursuivre pendant 2 heures.

On obtient ainsi un polymère non réticulé et deux microgels contenant un polymère réticulé avec un taux de réticulation différent.

Le polymère non réticulé et les deux microgels sont ensuite mis séparément en solution à une concentration de 5000 ppm en condition anaérobie dans une saumure comprenant, pour 1000g de saumure, 40g de NaCl, 0,55g de KCl, 7,07g de CaCl₂; 2H₂O, 1,96g de MgCl₂ ; 6H₂O, 0,025g de BaCl₂ ; 2 H₂O, 0,07g de SrCl₂; 6H₂O, 0,07g de NaHCO₃ et 0,01g de Na₂SO₄.

Après agitation pendant 2 heures, chacune des solutions est transférée dans une ampoule en inox qui est ensuite placée dans une étuve à 60°C. Des mesures de viscosité sont effectuées à intervalle de temps régulier à l'aide d'un viscosimètre Brookfield muni d'un module LV à 6 rpm. Les résultats sont présentés sur la Figure 1.

La viscosité de la solution de référence contenant le polymère non réticulé (sans PEG diacrylate) est relativement constante au cours du temps.

La viscosité des solutions contenant le microgel obtenu à partir des échantillons contenant du PEG diacrylate ont une viscosité initiale très faible par rapport à celle de la solution contenant le polymère non réticulé.

En trois jours à 60°C, la viscosité de la solution contenant le microgel réticulé avec 50 ppm de PEG diacrylate (invention) est comparable à celle du polymère non réticulé (référence). En vingt jours à 60°C, la viscosité de la solution contenant le microgel réticulé avec 1000 ppm de PEG diacrylate (contre-exemple) est comparable à celle du polymère non réticulé (référence).

La viscosité initiale plus faible de la solution de microgel selon l'invention et selon le contre-exemple rend le pompage des microgels plus facile que celui de la solution de référence. Par ailleurs, la forme microgel permet de protéger le polymère de la dégradation mécanique lors de l'injection.

Le délai de 3 jours pour obtenir une solution avec la viscosité de référence permet de balayer efficacement la formation souterraine. Le polymère est donc mieux protégé lors de la phase d'injection tout en étant rapidement efficace une fois dans la formation souterraine lorsqu'il est injecté sous forme de microgel selon l'invention.

En revanche, le délai de 20 jours pour obtenir une solution avec la viscosité de référence est trop long pour obtenir un balayage efficace de la formation souterraine. Ainsi, même si la forme microgel permet de protéger le polymère, une réticulation en présence de 100 ppm de PEG diacrylate ne permet pas d'obtenir un fluide efficace pour la récupération assistée de pétrole.

## Revendications

1. Procédé de récupération assistée du pétrole par balayage d'une formation souterraine comprenant l'injection dans la formation souterraine d'une composition aqueuse comprenant des microgels comprenant au moins un polymère réticulé, **caractérisé en ce que** ledit polymère est réticulé avec au moins un réticulant apte à être dégradé dans les conditions de température de la formation souterraine, et a une teneur en réticulant comprise entre 1 et 90 ppm en mole par rapport au nombre total de moles de monomères constitutifs du polymère.

2. Procédé selon la revendication 1, **caractérisé en ce que** le procédé comprend les étapes suivantes :
a. préparer un fluide d'injection à partir d'une émulsion inverse de polymère, avec de l'eau ou une saumure, afin d'obtenir des microgels dans ledit fluide,
b. injecter le fluide d'injection dans une formation souterraine,
c. balayer la formation souterraine à l'aide du fluide injecté,
d. récupérer un mélange aqueux et huileux et/ou gazeux.

3. Procédé selon la revendication 2, **caractérisé en ce que** le procédé comprend une étape d'étude préliminaire, précédant l'étape de préparation du fluide d'injection, dans laquelle la température de la formation souterraine est prise en compte pour sélectionner le ou les réticulants de telle manière que le ou les réticulants puissent être dégradés dans les conditions de température de la formation souterraine.

4. Procédé selon la revendication 1, **caractérisé en ce que** la quantité de réticulant est comprise entre 10 et 80 ppm, préférentiellement entre 30 et 70 ppm, plus préférentiellement entre 40 et 60 ppm.

5. Procédé selon la revendication 1, **caractérisé en ce que** le au moins un réticulant est choisi parmi le méthylène-bis-acrylamide, les di(méth)acrylamides de diamine, les esters (méth)acrylate de composés di hydroxylés, tri hydroxylés ou tetra hydroxylés, les composés divinyl ou diallyl séparés par un groupe azoïque et les esters vinyl ou allyl de diacides ou triacides.

6. Procédé selon la revendication 1, **caractérisé en ce que** le au moins un réticulant est choisi parmi les diacrylates hydrosolubles tels que le diacrylate de PEG 200, le diacrylate de PEG 400 et le diacrylate de PEG 600, et les dérivés polyvinyliques de polyalcools tels que le triméthylol triacrylate éthoxylé 9-20.

7. Procédé selon la revendication 1, **caractérisé en ce que** les microgels comprennent au moins deux réticulants différents, tous étant aptes à être dégradés dans les conditions de température de la formation souterraine.

8. Procédé selon la revendication 1, **caractérisé en ce que** les microgels sont dépourvus de réticulant inapte à être dégradé dans les conditions de température de la formation souterraine.

9. Procédé selon la revendication 1, **caractérisé en ce que** le polymère est obtenu à partir d'au moins un monomère non ionique et/ou au moins un monomère anionique et/ou au moins un monomère cationique.

10. Procédé selon la revendication 9, **caractérisé en ce que** le au moins un monomère non ionique est choisi dans le groupe comprenant l'acrylamide, le méthacrylamide, le N-isopropylacrylamide, le N,N-diméthylacrylamide, le N-méthylolacrylamide, la N-vinylformamide, le N-vinyl acctamide, la N-vinylpyridine, la N-vinylpyrrolidone, l'acryloyl morpholine (ACMO) et la diacétone acrylamide.

11. Procédé selon la revendication 9, **caractérisé en ce que** le au moins un monomère anionique est choisi parmi l'acide acrylique, l'acide méthacrylique, l'acide itaconique, l'acide maléique, l'acide 2-acrylamido-2-méthylpropane sulfonique (ATBS), l'acide vinylsulphonique, l'acide vinylphosphonique, ledit monomère anionique étant non salifié, partiellement ou totalement salifié, et les sels du méthacrylate de 3-sulfopropyle.

12. Procédé selon la revendication 9, **caractérisé en ce que** le au moins un monomère cationique est choisi parmi l'acrylate de diméthylaminoéthyle (ADAME) quaternisé, le méthacrylate de diméthylaminoéthyle (MADAME) quaternisé, le chlorure de diméthyldiallylammonium (DADMAC), le chlorure d'acrylamido propyltriméthyl ammonium (APTAC), et le chlorure de méthacrylamido propyltriméthyl ammonium (MAPTAC).

13. Procédé selon la revendication 1, **caractérisé en ce que** la taille moyenne des microgels de polymère réticulé dans la composition aqueuse est comprise entre 0,1µm et 10µm.

14. Procédé selon la revendication 1, **caractérisé en ce que** le réticulant présente un poids moléculaire inférieur à 1500 g/mol, plus avantageusement inférieur à 1000 g/mol et encore plus avantageusement inférieur à 800 g/mol.

## Patentansprüche

1. Verfahren zur tertiären Ölgewinnung durch Spülung einer unterirdischen Formation, umfassend das Einspritzen einer wässrigen Zusammensetzung, die Mikrogele umfasst, welche mindestens ein vernetztes Polymer umfassen, in die unterirdische Formation, **dadurch gekennzeichnet, dass** das Polymer mit mindestens einem Vernetzer vernetzt ist, der unter den Temperaturbedingungen der unterirdischen Formation abgebaut werden kann, und einen Vernetzergehalt zwischen 1 und 90 ppm in Mol, bezogen auf die Gesamtzahl der Mole an das Polymer bildenden Monomeren, aufweist.

2. Verfahren gemäß Anspruch 1, **dadurch gekennzeichnet, dass** das Verfahren die folgenden Schritte umfasst:
a. das Herstellen eines Einspritzfluids aus einer inversen Polymeremulsion mit Wasser oder Salzlösung, um Mikrogele in dem Fluid zu erhalten;
b. das Einspritzen des Einspritzfluids in eine unterirdische Formation,
c. das Spülen der unterirdischen Formation mit Hilfe des eingespritzten Fluids,
d. das Gewinnen eines wässrigen und öligen und/oder gasförmigen Gemisches.

3. Verfahren gemäß Anspruch 2, **dadurch gekennzeichnet, dass** das Verfahren einen Voruntersuchungsschritt vor dem Schritt der Herstellung des Einspritzfluids umfasst, wobei die Temperatur der unterirdischen Formation berücksichtigt wird, um den oder die Vernetzer so auszuwählen, dass der oder die Vernetzer unter den Temperaturbedingungen der unterirdischen Formation abgebaut werden kann bzw. können.

4. Verfahren gemäß Anspruch 1, **dadurch gekennzeichnet, dass** die Menge an Vernetzer zwischen 10 und 80 ppm, vorzugsweise zwischen 30 und 70 ppm, stärker bevorzugt zwischen 40 und 60 ppm beträgt.

5. Verfahren gemäß Anspruch 1, **dadurch gekennzeichnet, dass** der mindestens eine Vernetzer aus Methylen-bis-acrylamid, Diamindi(meth)acrylamiden, (Meth)acrylatestern von Dihydroxyl-, Trihydroxyl- oder Tetrahydroxylverbindungen, Divinyl- oder Diallylverbindungen, die durch eine Azogruppe getrennt sind, und Vinyl- oder Allylestern von Disäuren oder Trisäuren ausgewählt ist.

6. Verfahren gemäß Anspruch 1, **dadurch gekennzeichnet, dass** der mindestens eine Vernetzer aus wasserlöslichen Diacrylaten, wie z.B. PEG-200-Diacrylat, PEG-400-Diacrylat und PEG-600-Diacrylat, und Polyvinylderivaten von Polyalkoholen, wie z.B. 9-20-ethoxyliertem Trimethyloltriacrylat, ausgewählt ist.

7. Verfahren gemäß Anspruch 1, **dadurch gekennzeichnet, dass** die Mikrogele mindestens zwei verschiedene Vernetzer umfassen, die jeweils unter den Temperaturbedingungen der unterirdischen Formation abgebaut werden können.

8. Verfahren gemäß Anspruch 1, **dadurch gekennzeichnet, dass** die Mikrogele keinen Vernetzer aufweisen, der unter den Temperaturbedingungen der unterirdischen Formation nicht abgebaut werden kann.

9. Verfahren gemäß Anspruch 1, **dadurch gekennzeichnet, dass** das Polymer aus mindestens einem nichtionischen Monomer und/oder mindestens einem anionischen Monomer und/oder mindestens einem kationischen Monomer erhalten wird.

10. Verfahren gemäß Anspruch 9, **dadurch gekennzeichnet, dass** das mindestens eine nichtionische Monomer aus der Gruppe, umfassend Acrylamid, Methacrylamid, N-Isopropylacrylamid, N,N-Dimethylacrylamid, N-Methylolacrylamid, N-Vinylformamid, N-Vinylacetamid, N-Vinylpyridin, N-Vinylpyrrolidon, Acryloylmorpholin (ACMO) und Diacetonacrylamid, ausgewählt ist.

11. Verfahren gemäß Anspruch 9, **dadurch gekennzeichnet, dass** das mindestens eine anionische Monomer aus Acrylsäure, Methacrylsäure, Itaconsäure, Maleinsäure, 2-Acrylamido-2-methylpropansulfonsäure (ATBS), Vinylsulfonsäure, Vinylphosphonsäure, wobei das anionische Monomer nicht in ein Salz überführt, teilweise in ein Salz überführt oder gänzlich in ein Salz überführt ist, und den Salzen von 3-Sulfopropylmethacrylat ausgewählt ist.

12. Verfahren gemäß Anspruch 9, **dadurch gekennzeichnet, dass** das mindestens eine kationische Monomer aus quaternisiertem Dimethylaminoethylacrylat (ADAME), quaternisiertem Dimethylaminoethylmethacrylat (MADAME), Dimethyldiallylammoniumchlorid (DADMAC), Acrylamidopropyltrimethylammoniumchlorid (APTAC) und Methacrylamidopropyltrimethylammoniumchlorid (MAPTAC) ausgewählt ist.

13. Verfahren gemäß Anspruch 1, **dadurch gekennzeichnet, dass** die mittlere Größe der Mikrogele aus vernetztem Polymer in der wässrigen Zusammensetzung zwischen 0,1 µm und 10 µm beträgt.

14. Verfahren gemäß Anspruch 1, **dadurch gekennzeichnet, dass** der Vernetzer ein Molekulargewicht von weniger als 1.500 g/mol, noch vorteilhafter von weniger als 1.000 g/mol und sogar noch vorteilhafter von weniger als 800 g/mol aufweist.

## Claims

1. A method for enhanced oil recovery by flushing an underground formation comprising the injection into the underground formation of an aqueous composition comprising microgels comprising at least one crosslinked polymer, **characterized in that** said polymer is crosslinked with at least one crosslinker capable of being degraded under the temperature conditions of the underground formation, and has a crosslinker content of between 1 and 90 ppm in moles relative to the total number of moles of monomers constituting the polymer.

2. The method according to claim 1, **characterized in that** the method comprises the following steps:
a. Preparing an injection fluid from an inverse emulsion polymer, with water or a brine, to obtain microgels in said fluid,
b. Injecting the injection fluid into an underground formation,
c. Flushing of the underground formation using the fluid injected,
d. Recovering an aqueous and/or oil and/or gaseous mixture.

3. The method according to claim 2, **characterized in that** the method comprises a preliminary study step, preceding the step of preparation of the injection fluid, wherein the temperature of the underground formation is taken into account to select the crosslinker or crosslinkers in such a way that the crosslinker or crosslinkers can be degraded under the temperature conditions of the underground formation.

4. The method according to claim 1, **characterized in that** the quantity of crosslinker is between 10 and 80 ppm, preferably between 30 and 70 ppm, more preferably between 40 and 60 ppm.

5. The method according to claim 1, **characterized in that** the at least one crosslinker is chosen from methylene-bis-acrylamide, diamine di(meth)acrylamides, (meth)acrylate esters of di-hydroxyl, tri-hydroxyl or tetra-hydroxyl compounds, divinyl or diallyl compounds separated by an azo group and vinyl or allyl esters of diacids or triacids.

6. The method according to claim 1, **characterized in that** the at least one crosslinker is chosen from water-soluble diacrylates such as PEG 200 diacrylate, PEG 400 diacrylate and PEG 600 diacrylate, and polyvinyl derivatives of polyalcohols such as 9-20 ethoxylated trimethylol triacrylate.

7. The method according to claim 1, **characterized in that** the microgels comprise at least two different crosslinkers, all being capable of being degraded under the temperature conditions in the underground formation.

8. The method according to claim 1, **characterized in that** the microgels are devoid of crosslinkers not capable of being degraded under the temperature conditions in the underground formation.

9. The method according to claim 1, **characterized in that** the polymer is obtained from at least one nonionic monomer and/or at least one anionic monomer and/or at least one cationic monomer.

10. The method according to claim 9, **characterized in that** the at least one nonionic monomer is chosen from the group comprising acrylamide, methacrylamide, N-isopropylacrylamide, N,N-dimethylacrylamide, N-methylolacrylamide, N-vinylformamide, N-vinyl acetamide, N-vinylpyridine, N-vinylpyrrolidone, acryloyl morpholine (ACMO), and diacetone acrylamide.

11. The method according to claim 9, **characterized in that** the at least one anionic monomer is chosen from acrylic acid, methacrylic acid, itaconic acid, maleic acid, 2-acrylamido-2-methylpropane sulfonic acid (ATBS), vinylsulfonic acid, vinylphosphonic acid, said anionic monomer being non-salified, partially salified or totally salified, and salts of 3-sulfopropyl methacrylate.

12. The method according to claim 9, **characterized in that** the at least one cationic monomer is chosen from quaternized dimethylaminoethyl acrylate (ADAME), quaternized dimethylaminoethyl methacrylate (MADAME), dimethyldiallylammonium chloride (DADMAC), acrylamido propyltrimethyl ammonium chloride (APTAC) and methacrylamido propyltrimethyl ammonium chloride (MAPTAC).

13. The method according to claim 1, **characterized in that** the mean size of the crosslinked polymer microgels in the aqueous composition is between 0.1 µm and 10 µm.

14. The method according to claim 1, **characterized in that** the crosslinker has a molecular weight below 1,500 g/mol, more advantageously below 1,000 g/mol and even more advantageously below 800 g/mol.
